# EUROPEAN PATENT SPECIFICATION

(11) **EP 3 747 418 B1**
(45) Date of publication and mention of the grant of the patent: **24.12.2025**
(21) Application number: 19747199.8
(22) Date of filing: 29.01.2019
(51) Int. Cl.: A23K 10/18, A23K 10/30, A23K 10/37, A23K 20/147, A23K 20/158, A23L 33/105, A23K 20/20, A21D 2/36, A21D 13/04, A21D 13/045, A21D 13/047, A21D 13/40, A23L 7/00, A23L 21/00, A23L 31/00, A23L 33/125

(54) **PROCESS FOR PRODUCTION OF FUNCTIONAL FOOD**
VERFAHREN ZUR HERSTELLUNG EINES FUNKTIONELLEN LEBENSMITTELS
PROCÉDÉ D'OBTENTION D'UN ALIMENT FONCTIONNEL

(30) Priority: 01.02.2018 CO 18001097
(43) Date of publication of application: 09.12.2020
(73) Proprietor: REISHI COLOMBIA S.A.S., Manizales Caldas (CO)
(72) Inventor: JARAMILLO DE ECHEVERRI, Carmenza, 65-140 MANIZALES CALDAS (CO); RESTREPO GUTIERREZ, Santiago, AL NORTE BOGOTÁ D.C. (CO); ECHEVERRI JARAMILLO, Alejandro, Manizales (CO); RESTREPO GUTIERREZ, Sergio, Manizales (CO)
(74) Representative: Monteiro Alves, Inês
(86) International application number: PCT/CO2019/050001
(87) International publication number: WO 2019/149292

(56) References cited:
- WO-A1-2011/032244
- WO-A1-2014/145256
- WO-A2-2015/101650
- KR-A- 20140 050 236
- US-A1- 2014 302 560
- US-A1- 2015 257 406
- ALEMAWOR FRANCIS ET AL: "Effect of Pleurotus ostreatus fermentation on cocoa pod husk composition: Influence of fermentation period and Mn 2+ supplementation on the fermentation process", AFRICAN JOURNAL OF BIOTECHNOLOGY, vol. 8, 4 May 2009 (2009-05-04), pages 1950 - 1958, XP055844173
- LEIFA, F. ET AL.: "Production of Flammulina velutipes on Coffee Husk and Coffee Spent-ground", BRAZILIAN ARCHIVES OF BIOLOGY AND TECHNOLOGY, vol. 44, 2001, pages 205 - 212, XP055628370
- SOCCOL, C. ET AL.: "EFFECT OF CAFFEINE AND TANNINS ON CULTIVATION AND FRUCTIFICATION OF PLEUROTUS ON COFFEE HUSKS", BRAZILIAN JOURNAL OF MICROBIOLOGY, vol. 37, 2006, pages 420 - 424, XP055628373

## Description

### FIELD OF THE INVENTION

The invention herein is related to both agronomical and chemical engineering; more particularly, to leveraging by-products from the cultivation, processing and industrializing of coffee and cocoa. These by-products are transformed by using entomopathogenic macromycetes and macromycetes.

### BACKGROUND OF THE INVENTION

At present, during the production process of coffee and cocoa, huge amounts of polluting by-products are generated, as an example the main solid by-products generated during the benefit of the fruit and industrialization of coffee beans are: the pulp, with an average production of 2 fresh tons per hectare year, the cisco, the silver film, the coffee bean, and the coffee souk (sawdust of the coffee stalk), in this sense table No. 1 shows the amount of these by-products in Latin America discriminated for country:

**Table 1**

| Country | Coffee pulp | Coffee husk | | Spent ground coffee |
|---|---|---|---|---|
| Bolivia | 14950 | 1725 | | 3450 |
| Brazil | 6607380 | 762390 | | 1524780 |
| Ecuador | 107640 | 12420 | | 24840 |
| Paraguay | 2600 | 300 | | 600 |
| Peru | 537290 | 61995 | | 123990 |
| Cuba | 13000 | 1500 | | 3000 |
| Dominican Republic | 715000 | 8250 | | 16500 |
| Haiti | 42250 | 4875 | | 9750 |
| Colombia | 1235000 | 142500 | | 285000 |
| Costa Rica | 217230 | 25065 | | 50130 |
| El Salvador | 161460 | 18630 | | 37260 |
| Guatemala | 408590 | 47145 | | 94290 |
| Guyana | 650 | 75 | | 150 |
| Honduras | 637000 | 73500 | | 147000 |
| Jamaica | 3250 | 375 | | 750 |
| Mexico | 507000 | | 58500 | 117000 |
| Nicaragua | 174460 | | 20130 | 40260 |
| Panama | 13000 | | 1500 | 3000 |
| Trinidad and Tobago | 1300 | | 150 | 300 |
| Venezuela | 130000 | 15000 | 30000 | 4800 |
| Total | 10.885.550 | 1.256.025 | 2512050 | 401928 |

One of the most important by-products for its protein value is the coffee pulp that reaches figures of 10,885,550 thousand tons per year in unproducted by-product and much less used in any production process, these remain in the rural area farms and cultivation sites, where precisely in the vast majority of cases there is a lack of infrastructure, resources and methodology for a correct final disposition.

As an example, in table No. 2 COD, the percentage of substances that must be degraded with oxygen or oxidized is observed in percentages, this indicates the amount of pollution produced in the water once these by-products have been spilled:

**Table 2**

| Material | Ps/kg cc | % C | C | O2 | COD (g/kg) | COD ppm |
|---|---|---|---|---|---|---|
| Pulp | 80 | 51 | 40.8 | 108.9 | 109 | 36.000 |
| Husk | 35 | 54 | 18.9 | 50.46 | 51 | 16.800 |
| Spent ground | 40 | 55 | 22 | 58.74 | 59 | 19.000 |

NOTE: Each kilogram of pulp is equivalent to the excreta of 2 people per day Total coffee pulp: 10,885,550 tons. Which correspond to 10885550 * 103 kg. Equivalent to 10885550 * 2 * 103 excreted people in one day.

Calculation base: 1 kg of cherry coffee.

**Table 3 represents the COD conversion from g / kg to C02 emitted by g 1 g COD = 1, 375 C02**

| Material | COD (g/kg) | COD ppm | CO₂ emitted (g) |
|---|---|---|---|
| Pulp | 109 | 36,000 | 49500 |
| Husk | 51 | 16,800 | 23100 |
| Spent ground | 59 | 19,000 | 26125 |

Gasoline engines emit 2.3 kg of C02 for each liter of gasoline burned, compared in contamination to one of the referred by-products it is found that 1 kg of coffee pulp is equivalent to 2.15 cars when they spend 1 liter of each gasoline.

On the other hand, from the characterization of coffee by-products and their digestibility capacity we have that coffee husk, for example, has properties that could be used in a food perspective. However, its high concentration of caffeine and tannins are negative from an environmental point of view. (Na-vya and Pushpa, 2013).

Tannins produce astringency and bitter taste in coffee by-products. While there are specific tannins that can be healthy, they are generally toxic, due to the same properties that make them good for tanning: their ability to bind proteins to each other in a non-specific way.

For a long time it was thought that the tannins formed complexes with the gut proteins of the herbivores forming hydrogen bonds between their hydroxyl groups and the electronegative sites of the protein, but more recent evidence also supports a covalent bond between the tannins (and other compounds phenolics from plants) and the proteins of the herbivores that consume them. The foliage of many plants contains enzymes that oxidize phenols to their quinone forms in the intestines of herbivores. Quinones are highly reactive, electrophilic and react with the nucleophilic protein groups -NH2 and -SH. Whatever the mechanism by which the protein-tannin binding occurs, this process has a negative impact on the nutrition of herbivores. Tannins can inactivate the digestive enzymes of herbivores and create aggregate complexes of tannins and plant proteins that are difficult to digest, therefore the present invention that will be explained later combines the properties of by-products to improve their digestibility and thus consumption and use of them. (Source: https://es.wikipedia.org/wiki/Tanino).

On the other hand, during the different processes for obtaining the "green bean", a large number of by-products are generated, as much as 50% of the coffee fruits are not used for the production of green coffee beans. Most of the by-products are used as fertilizers, but the use is limited due to the amount of organic matter since the high concentration of caffeine, tannins and polyphenols makes the by-products highly polluting and inadequate as feed for animals in large quantities.

For its part in relation to cocoa, the International Cocoa Organization (loco) estimates 4.733 million tons of world production of this grain for the cocoa year 2016/2017, according to the latest estimates recently reviewed and published in the quarterly statistics bulletin of the seed said production figure represents 740 thousand tons more or an 18.5% increase in relation to the balance of the cocoa year 2015/2016, when it closed at 3,993 million tons. It is worth mentioning that the cocoa production year runs between October 1 and September 30 of each year and the cocoa producing countries are located in the southern hemisphere, most of them are third world countries.

The following table No. 4 shows the behavior of the cocoa market:

| Region/Country | million tons | % |
|---|---|---|
| **Africa** | 2,391 | 70.36 |
| Cameroon | 166 | 4.89 |
| Ivory Coast | 1292 | 38.02 |
| Ghana | 614 | 18.07 |
| Nigeria | 190 | 5.59 |
| Others | 129 | 3.80 |
| **Americas** | 411 | 12.10 |
| Brazil | 126 | 3.71 |
| Dominican Republic | 47 | 1.38 |
| Ecuador | 114 | 3.35 |
| Others | 124 | 3.65 |
| **Asia and Oceania** | 596 | 17.54 |
| Indonesia | 490 | 14.42 |
| Malasia | 31 | 0.91 |
| Papua New Guinea | 50 | 1.47 |
| Others | 25 | 0.74 |
| **Total** | 3,398 | 100.00 |

**Table 5 shows world cocoa production:**

| Country | Share (%) |
|---|---|
| Ivory Coast | 44 |
| Ghana | 16 |
| Indonesia | 15 |
| Nigeria | 6 |
| Brazil | 5 |
| Cameroon | 5 |
| Ecuador | 4 |
| Dominican Republic | 2 |
| Papua New Guinea | 2 |
| Malaysia | 2 |
| Colombia | 2 |
| Mexico | 2 |

From its composition, it is known that cocoa is an important source of protein, fat and fiber; The fat is also rich in stearic acid, a non-atherogenic neutral fatty acid and in linoleic acid, an essential fatty acid. Cocoa seed also contains several of the minerals (potassium, magnesium, phosphorus) that are essential in the diet [CHEVAUX, K; JAKSON, L and VILLAR M], in addition to appreciable amounts of polyphenols especially flavonoids, substances with high antioxidant potential [WOLLGAST, J and ANKLAM, E, DREOSTY, L. and MILLER, M et al].

The chemical composition of the dry and fermented cocoa bean has been evaluated in different varieties, finding that fat is the majority component with contents ranging between 49% and 56%. Some authors [LIENDO, R; PADILLA, F and QUINTANA, A, ACOSTA, R et a] established that the fatty acid composition does not show appreciable variations between Criollo, Forastero and Trinitario type cocoa even though the Trinitarian cocoa fat presented the highest palmitic acid content (28 %) and the lowest stearic acid (33%). Other authors [TUCCI, M; ABREU, M and SAES, L., SPANGENBERG, J and DIONISI, F.,] using cocoa from Brazil, Ghana, Ivory Coast, Indonesia and Ecuador found that the fat content and fatty acid composition of butter Cocoa does vary with genotype, weather conditions and harvest time.

For cocoa from the Germplasm Bank of Venezuela, called "fine cocoa" by farmers, moisture values of 2.5% - 3.1% were obtained; ashes 3.2% -3.9%; 11.4% -13.8% protein and 52% -54% fat [PEREZ, E; ALVAREZ, C and LARES, M ..], similar to those reported by Fececacao [FEDECACAO.] And Cote et al. [COTE, M; JIMENEZ, J and PEREA, J] for cultivated cocoa

On the other hand, the process of benefit of cocoa has three phases, first the reduction that consists in the opening of the cocoa pods and removal of the placental grains manually, once the latter the second step is fermentation, which It consists of the arrangement of these grains in a certain area where cocoa beans move and aerate for several days to cause a detachment of their mucilage, which produces an exudate that occurs mostly the first few days in that the pulp that surrounds the fruit (seeds) comes off Enriquez-Gustavo (1985) it is estimated that the production is around 4 to 6 liters per 100kg of dough, and that during the next 6 hours, a little less than half (almost 3 liters per 100kg of dough) of juices.

This emission of exudate ceases almost completely when 24 hours have elapsed, therefore, for each hectare year, 2 tons of cocoa husk are generated as a byproduct, the final step consists of drying which is based on reducing the content of humidity, acidity and astringency achieving the development of the characteristic chocolate color of well fermented grains.

From these phases of cocoa, it is observed that the by-products of importance and that they are polluting, in addition to not having a useful purpose, are the husk of the cocoa cob, the mucilago and the husk of the grain, substances that are spilled to the ground generating proliferation of Pathogenic microorganisms and contamination, as well as the concave shape of the shells that accumulate water through the rain, favoring the spread of Phytophorora spp. In relation to the components and physicochemical properties of cocoa by-products, there are important amounts of proteins, minerals, fat, fiber carbohydrates, among others, which are observed in Tables 6 and 7 below:

**Table 6**

| Chemical composition of the husk from cacao cob | |
|---|---|
| Component (%w/w) | |
| Moisture | 85 |
| Protein | 1.07 |
| Minerals | 1.41 |
| Grease | 0.02 |
| Fiber | 5.45 |
| Carbohydrate | 7.06 |
| N | 0.171 |
| P | 0.026 |
| K | 0.545 |
| Pectine | 0.889 |

**Table 7**

| Chemical composition of the mucilage from cacao | |
|---|---|
| Composition | %w/w (wet base) |
| Water | 79.2-84.2 |
| Protein | 0.09-0.11 |
| Sugars | 12.50-15.9 |
| Glucosa | 11.6-15.32 |
| Pectines | 0.9-1.19 |
| Citric acid | 0.77-1.52 |
| ashes | 0.40-0.50 |

As can be seen in the previous tables of chemical composition of cocoa husk and mucilage, these by-products have physicochemical properties with high potential for food, however, they are discarded precisely because of their difficult use due to the high concentration of proteins, sugars , fibers, carbohydrates, among others, components on which there is no known process for use as food.

Now, in terms of food and low-cost products, fungi, mostly macromycetes, as crop and process enrichment agents, some of the best known for their properties, have been treated and used quite regularly in the food and pharmaceutical industry they are the Lentinula edodes, Pleurotus sajor-caju, Pleurotus florida, Hypsizygus marmoreus and Ganoderma lucidum, which focus on the treatment of products that have a high content of lignocellulose, or are used for other solutions and mixtures.

It has also been shown that fungi and mycelium extracts contain a variety of pharmacologically important compounds. The pharmacological activity of these compounds depends on their molecular structure in solution. The use of conventional pharmacological techniques of crystallization or solidification of other compounds of interest for pill administration may decrease or destroy the efficacy of the compounds by altering the macromolecular structure, generally performed in another technique by chemically modifying the polysaccharide structure, for example. Through the so-called Smith degradation, degradation, formolysis and carboxymethylation, chemical engineers have increased the water solubility of polysaccharides, thereby improving anticancer activity. In order to present the mycelium extract to the human body suitable for oral ingestion in an unaltered and watersoluble form, these structures must remain in solution in association with small molecules.

The association of small molecules and the improved bioavailability are achieved through the formulated association of mycelial extracts; These concentrated mycelia contain polysaccharides, glycoproteins, proteins and enzymes, triterpenes, sterols, ergosterols, fatty acids and other metabolites and with or without small molecules water, ethyl, citric alcohol and ascorbic acid, grapefruit essential oils, orange, lemon, lime and tangerine, evaporated cane sugar and honey, promotes and accentuates the passive absorption of the mycelial extract after oral consumption. When the protopectins are transformed or hydrolyzed, the cell wall disintegrates, leaving the cell plasma free. In this plasma in addition to pectins, there are sugars and organic acids derived from metabolism and the conversion of starch into sugars. (Carbonell and Villanova 1952). These small molecules help as explained above to passive absorption of the mycelial extract after oral consumption.

If there were an adequate methodological for the use of the by-products, a great contribution could be made to the nutritional needs of these people; The present invention precisely develops a methodology that allows the effective use of these by-products by opening an immense range of possibilities for food solutions and environmental solutions.

In the coffee and cocoa industries, there is great difficulty in disposing and reusing large volumes of waste produced, such as coffee and cocoa by-products. These waste materials are underused because of their high content of tannic acid, chlorogenic acid and fibers of difficult decomposition. These under-utilized by-products have low digestibility because of their high content of organic matter, such as proteins, amino acids and others. These materials are also highly polluting because of their content of protein, amino acids and other elements. As a result, oftentimes these materials are disposed of in open fields or thrown in rivers and streams.

It is worth noting that foods with a high content of protein such as beef and pork are relatively more expensive than other foods and raise serious environmental and ethical concerns, especially when undertaken at an industrial scale.

In addition, foods rich in protein are expensive and have a large environmental footprint. It is worth mentioning that developing countries still have a large need of low-cost protein; these are some of the countries that produce the largest amounts of agricultural by-products.

Previous solutions to the problem of increasing protein content use macromycetes. For instance, patent WO2017181085A consists in a method for the production and use of myceliated food compositions, which have a high protein content. This patent shows a method to create a food product that is high in myceliated protein, which involves cultivating the mushroom in an aqueous medium with high levels of protein; for instance, at least 20 grams of protein per 100g of dry weight with excipients, in dry weight. After the cultivation, the material is harvested, and a food product high in myceliated protein is obtained through drying or concentration.

Another state of the art patent is US Patent No. 9068171B2, which executes the myceliation process on green coffee beans, uses agitation techniques to produce spheres of hyphae 10µm to 10mm of diameter. The use of this patent increases the efficacy of the inoculation during fermenting in solid state because the spheres grow in all directions. The techniques of agitation and fermentation whirlpool in liquid state include: mechanical cuts using magnetic agitation bars, stainless steel drivers, high-pressure sterile air injection, high pressure injection of sterile media and/or the use of agitating tables. The higher speeds of agitation and turbulence, and the injection of air and media, produce smaller mycelial spheres, aliquots of which are used to inoculate agricultural substrates of solid state for the posterior semi-aerobic fermentation. This process has long incubation times and has processes with mechanical agents and requires a large amount of expensive equipment. In addition, this patent has steps and components that features a "liquid state cultivation" for agricultural materials

The technology described in US Publication No. 20150257406A1 uses products from myceliated cocoa and methods to produce myceliated products from green cocoa and other agricultural substrates. This publication supplies a method for the preparation of a bean of myceliated cocoa or another agricultural product. This method involves supplying cocoa grains or other agricultural substrates, optionally hydrating the cocoa grains or other agricultural products and optionally having pasteurization or sterilization of the cocoa grains or the other agricultural substrates to supply grains of cocoa that are myceliated.

The methods of US Publication No. 20150257406A1 result in prepared cocoa grains (or other agricultural substrates) which have reduced levels of undesired flavors such as theobromine, catechin, epicatechin, equivalents of gallic acid and /or 2-metoxi-3-isopropilpirazine. This invention also results in augmented levels of the myceliation process, such as fungical β-glucans, chitin, proteins, glycoproteins, pyrazines and polysaccharides in relation to the start of the cocoa grains or other agricultural substrate. The main objective *of* US Publication No. 20150257406A1 *is to improve* the flavor and improve upon other problems in the cocao grain. US Publication No. 20150257406A1 does not involve the by-products generated in the process.

Another related invention is US Patent No. 7178285B2. This invention is based in the treatment of purple corn, black corn, purple barley and purple rice with liquid inoculum, where the incubation times depend on each one of the grains. The cocoa grain is used as the final product of the cocoa harvest and industrial process; here, the solid material is sterilized before being introduced in the reactor, in some cases pasteurized. The chemical compositions of the green cocoa grain contain at least 57% of grease (cocoa butter) and 15,625 of protein. The invention uses laboratory equipment such as reactors and liquid and solid fermenters. The final product is a conventional food that was already valuable and digestible since the beginning and prior to the mentioned process.

Another document, US Publication No. 20170156383A1A is directed to a method for enhancing the taste of a food product, which includes the steps of culturing a mycelial liquid tissue culture in a media, collecting a mycelium-free portion of the mycelial liquid tissue culture, e.g., the supernatant fluid of the mycelial liquid tissue culture, and adding the collected supernatant fluid to a food product in an amount sufficient to enhance the food product's taste. The mycelial liquid tissue culture may include *C. sinensis,* and the culture step may be carried out for between about one and sixty days. The food products include non-nutritive sweeteners, alcoholic beverages, teas, coffees, bitter tasting foods such as cranberry, grapefruit, pomegranate, and coconut, as well as dietary supplements, food additives, pharmaceuticals, and nutraceuticals.

US Patent No. 7178285 B2 describes a method to increase the amounts of one or more functional composites in mushrooms, via cultivating the mushrooms over a substrate that is high in functional composites or interest composites. This method involves supplying a substrate with one or more anthocyanins and cultivating mushrooms over the substrate. The mushrooms are cultivated over a substrate rich in anthocyanins, such as purple corn or other adequate red, purple or dyed black substrate. The mushrooms incorporate the anthocyanins during their growth. Also, the process provides mushrooms cultivated using this methodology, and methods to improve the speed of growth and the power of the mushrooms. This methodology strives to improve the amount of anthocyanins in final harvested products or well-known market ready products, in this case several kinds of grains of corn and rice.

WO 2014145256 A1 describes a method for the preparation of myceliated coffee products in which the process is effected over the sterilized green coffee beans. The process attempts to reduce the number of undesirable components, reduce chlorogenic acid, reduce unsavory flavors, reduce amounts of caffeine and an increase in polysaccharides and B-glucans. Once again, the final product is a conventional food that was already valuable and digestible since the beginning and prior to the mentioned process.

Alemawor Francis et al. (2009) discloses a method for fermenting cocoa pod husks with *Pleurotus ostreatus* to improve the nutritional value for use in feedstuff. In particular, a method is shown wherein 10kg of cocoa pod husks pellets are mixed with water to obtain a moisture content of about 65%, transferred to plastic containers and fermented for 3 days. Chemical catalysts are also added during the process. After steam-pasteurization, the material was inoculated with *Pleurotus ostreatus* and incubated in a dark room at temperature of 23-25 °C and 80% relative humidity for 7 weeks. At the end of each week, samples were obtained and solar-dried to an average moisture content of 9% and crushed for analysis.

KR 2014 0050236 A provides a medium (of fungal culture) composition for promoting a growth of mycelia that contains a coffee waste as an active component or for producing the mycelia with an improved antioxidative activity. The mushroom mycelia obtained by using the medium composition has promoted growth speed and improved antioxidative activity.

WO 2011/032244 A1 discloses a method for producing flours from grain myceliated with macroscopic fungi (mushrooms). These flours can be used to prepare food for human consumption, such as bread and biscuits, and for animal consumption, such as fodder. Active principles (ergosterol, beta glucan, linoleic and oleic acids, lectins), enzymes, proteins, amino acids, vitamins, mineral salts, inter alia, can also be extracted from these flours for use in the chemical, foodstuff and cosmetic industries, for producing phytotherapeutic agents, pharmaceuticals, textiles, paper products, pharmaceuticals and fodder for animals. In the method disclosed, the raw material are only grains (edible food).

US 2014/302560 A1 relates to a method of creating an extract of myceliated agricultural product for human consumption which includes providing an agricultural substrate such as rice, where the agricultural substrate has been inoculated by liquid media comprising an aliquot of culture derived from liquid-state fermentation. The culture is selected from the group consisting of Basidiomycota and Ascomycota fungi and the mycelium grows on the substrate by controlling temperature, humidity and sterility of the environment. After mycelium growth on the substrate reaches a desired stage, then the step of boiling the substrate in water and separating the water-substrate mixture into aqueous component and non-aqueous components creates an extraction. In this method, the agricultural substrate is only grains as well.

The study performed by Leifa, F. et al. (2001) used solid state cultivation (SSC) to evaluate the feasibility of using coffee husk and spent-ground as substrates without any nutritional supplementation for cultivation of edible fungus, such as edible mushroom *Flammulina,* under different conditions of moisture and spawn rate. However, the result of protein is only in the mushroom caps, not in the substrate.

Soccol, C. et al (2006) discloses the effect of caffeine and tannins on *Pleurotus* sp. cultivation and evaluates the feasibility of using coffee husks without any pretreatment as substrate for mushroom cultivation. However, at the end of the process, the coffee husk is not used as food.

In summary, in the state of the art, there are solutions that do not focus on the use of highly pollutant by-products; instead, the focus is on final products from existing common market ready harvests. Contrary to the invention presented in this paper, these previous techniques utilize high-cost equipment and small volume yields in laboratory scales.

### SUMMARY OF THE INVENTION

The invention is as defined in the appended claims.

### BRIEF DESCRIPTION OF THE DRAWINGS

The invention herein is related to both agronomical and chemical engineering; more particularly, to leveraging by-products from the cultivation, processing and industrializing of coffee and cocoa. These by-products are transformed by using entomopathogenic macromycetes and macromycetes.
Figure 1 is directed to a process of obtaining the coffee from its harvesting up to the cup, including the reference to by-products with double arrow.
Figure 2 describes the process of the cacao post-harvest process and its by-products.
Figure 3 describes the process of obtaining the functional food.

### DETAILED DESCRIPTION OF THE INVENTION

There is great difficulty in the use and final disposal of large volumes of by-products from the coffee and cocoa industries. These by-products, which are underutilized, have low digestibility due to their high content of tannins, chlorogenic acids and fiber of difficult decomposition and are highly polluting because of their organic matter content such as proteins, amino acids and other elements, are left to free exposure in the fields and sometimes are dumped in rivers.

In addition to the above, it is in the coffee and cocoa byproducts where antioxidants, original protein, vitamins and minerals are found and are not used for their bad taste and poor digestibility; this invention rescues and improves these hidden pre-existing qualities in the by-products, which were impossible to access in the original state of the by-product's structure.

As it can be seen in the state of the art on chemical composition of the cocoa husk and the mucilage, these byproducts have physicochemical properties with high potential for food, however, they are discarded precisely because of their difficult use due to their high concentration, fibers, chlorogenic acids and other components on which a process for its use as food is unknown.

Now, in the field of food products at low cost, mushrooms have been treated and used in the food and pharmacological industry quite regularly, mostly macromycetes, as enriching agents for crops and processes, some of the best known for their properties are the *Lentinula edodes, Pleurotus sajor-caju,* Pleurotus florida, Hypsizygus marmoreus and Ganoderma lucidum, which focus on the treatment of products that are high in lignocellulose are used for other solutions and mixtures.

Additionally and from another perspective, foods with a high protein content are increasingly scarce and expensive, which makes them difficult to access without knowing substitute alternatives to the usual ones, it is important to note that third world countries are those with the greatest amount of food needs, being in turn the ones that produce the greatest amount of agricultural by-products.

If there was a suitable methodology for the use of by-products, a great contribution could be made to the nutritional needs of these people; this invention precisely develops a methodology that allows the effective use of these by-products opening an immense range of possibilities of food solutions and environmental solutions.

In the state of the art, we then find solutions focused on the use of not by-products but existing products, or final products of existing crops in the market and using technologies that mostly use expensive of equipment and laboratory scale, situation that differs from that of this invention, where these circumstances are different.

According to the foregoing, the solution provided by this invention is a development that exploits, enriches, digestifies and improves the palliative qualities of byproducts resulting from the process of cultivation and industrialization of coffee and cocoa, through the transformation produced by the mycelium of fungi that grow directly in the by-product's biomass, decomposing the fibers, secreting enzymes, exopolisaccharides, and enriching the material with proteins, vitamins and mineral salts.

This invention refers to a process for obtaining a a product called functional food consisting, in one of its presentations, of flour composed of coffee byproducts and / or micelled cocoa with macromycete or entomopathogenic macromycete which is produced, mixed and enriched with the nutrients of its own growing substrate.

For the development of this invention the residual materials of the coffee and cocoa process are arranged from their cultivation to the industrialization of the coffee bean, these by-products are coffee pulp, coffee husk, silver coffee film, ground coffee waste, coffee tree sawdust, mucilage of coffee; for cocoa the residual materials of its process are also arranged such as cocoa pod husk, cocoa mucilage known as *baba de cacao* (which is pulp) and cocoa bean husk.

At the same time the inoculum is prepared and the process is developed from the inoculation of the by-products with solid mycelium under specific time, temperature, humidity and light variables in order to produce the desired effect which is to improve the physicochemical properties of the by-products , so that they become edible products, nutritional supplements of low cost and easy access, thus it is obtained as a final result after the myceliation, a functional food with characteristics of a high increase in the content of protein and antioxidants additional to the use of byproducts that otherwise contaminate the environment.

The result is particularly an innovative product rich in protein content, polysaccharides, antioxidants and low in caffeine. The functional food obtained has an increase in protein between 15 and 20% and an increase in the final amount of antioxidants due to the initial substrate and the action of the fungi grown in it.

This solution has numerous advantages since the technologies described in the state of the art above show that most of them use foods that are final products of agricultural crops as raw material, which are digestible and ready for the immediate disposition for massive consumption, this invention, on the other hand, uses rarely used by-products which present great difficulties in their exploitation and which today are not digestible and have little palatability.

The existing methodologies strictly require laboratory cultures by means of liquid fermentation in high-cost reactors, low volume and difficult scaling; the method of this invention, on the contrary, allows extensive production in low-cost culture rooms.

The advantages of this invention are represented in:
1. Mycelium of the fungus grows directly in the biomass of the by-product decomposing the fibers, secreting enzymes, exopolysaccharides and enriching the material with proteins, vitamins and mineral salts.
2. It solves the problem of food shortages, especially foods rich in protein that tend to have a higher price, which hinders access. On the other hand, there are few substitution alternatives.
3. The third world countries are those that have the greatest amount of food needs, being in turn those that have the greatest amount of agricultural by-products. This invention provides a methodology suitable for the use of by-products making a great contribution to the nutritional needs of people.
4. In the state of the art there are solutions focused on existing products or final products of the harvests, mostly using expensive equipment and on a laboratory scale. The solution to the technical problem of this invention focuses on obtaining a low-cost and replicable methodology on a large scale overcoming the limitations of existing technologies.
5. The methodologies known in the state of the art use liquid inoculum, this invention, on the contrary, uses solid inoculum.
In the byproducts we find antioxidants, protein, vitamins, minerals that were not used before because of their bad taste and poor digestibility; this invention rescues and improves these hidden pre-existing qualities in the by-products, which were impossible to access in the original state of the structure of the byproduct.

In light of this information, the solution provided by the invention is a development that leverages, enriches, digests and improves upon the palliative properties of coffee and cocoa industrial by-products. This is done through the transformation effected by mycelium in mushrooms that grow directly in the biomass of the subproduct, thus decomposing the fibers, secreting enzymes and exopolysaccharides and enriching the material with proteins, vitamins and mineral salts.

This solution features numerous properties because the technologies previously described use, as raw materials, foods that are the final products of agricultural harvests. The invention here described exclusively uses by-products that are rarely used and which are difficult to leverage into something useful, and are not digestible and have little palatability.

Current methods require laboratory cultivations through liquid fermentation or solid fermentation in high-cost reactors. These setups have a high cost, yield low volumes and are difficult to scale.

The methods in the state of the art use liquid inoculum and embodiments of the invention uses solid inoculum.

Finally, coffee and cocoa by-products contain antioxidants, some protein, vitamins and minerals that are at this moment not being used because of their foul flavor and bad digestibility; the current invention rescues and improves the pre-existing properties of the by-products, which were inaccessible in its original state

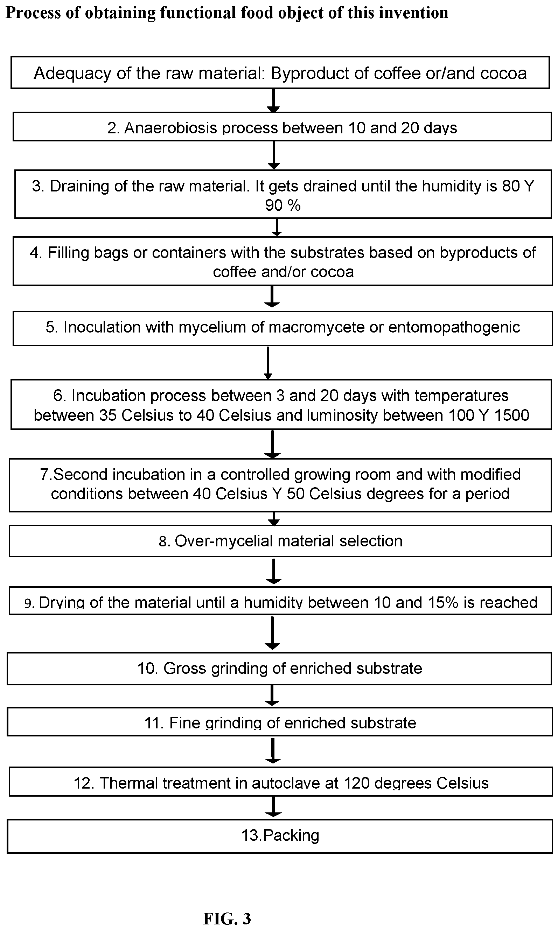

Figure 3 describes the process of the invention of obtaining the functional food.

This invention shows a process that refers to the production of dry food powder, called functional food, obtained from by-products of the coffee and cacao industry transformed by entomopathogenic macromycetes such as:

*Cordyceps sinesis* and *Cordyceps militaris* and macromycetes such as *Ganoderma lucidum, Pleurotus ostreatus, P. sajor-caju, P. ostreatoroseus, P. eringii, Ganoderma lucidum, G. Applanatum, Ganoderma tsugae, Flammulina velutipes, Lentinula edodes, Lentinus strigellus, Morchella esculenta, M. conica, Macrolepiota procera, Volvariella volvacea, Grifola frondosa, Agaricus bisporus, A. blazei* or *A. brasiliensis, A. bitorques, A. brunnensis, Armillaria melea, Armillaria lutea, Oudemansiella canarii, Pycnoporus sanguineus, P. cinabarina, Tremella fuciformis, Coprinus comatus, Coprinus cinereus, Cantharellus cibarius, Hericium erinaceus, Boletus edulis, Agrocybe spp., Auricularia spp., Inocybe spp., Lactarius spp., Trametes spp., Fomes spp., Ramaria spp., Suillus spp., Collybia spp., Coriolus versicolor, Pholiota nameko, Schizophyllum comune,* which have known nutritional and medicinal properties, in order to obtain a product that has a high nutritional value.

This process adds a greater nutritional value to the powders, making them rich in several components of the human and animal diet; at the same time, the manufacturing time is short which reduces the cost and the time of exit to the market in comparison with the current processes. These powders can be used for the domestic and industrial preparation/manufacture of foods such as vitamins, porridges, yogurts, soups, breads, biscuits, cakes, doughs, energy bars, cereals, fodder and the like. The method can also be used to obtain active ingredients (ergosterol, beta glucan, linoleic and oleic acid, lectins and such), enzymes, proteins, amino acids, vitamins, mineral salts and the like for use in food products, cosmetics industries, phytotherapy, pharmaceuticals, textiles, paper and medicine. Functional food contributes to the protein enrichment of foods and strengthens the immune system, giving value to its use in the treatment of diseases such as HIV or Cancer.

For the process proposed in this invention the residual materials and by-products of the coffee and cacao process are used from the cultivation to the industrialization of the coffee and cocoa bean. These coffee by-products are: Coffee pulp, coffee husk, silver coffee film, coffee mucilage, leftover coffee grounds, and cut coffee wood (coffee tree sawdust). Cacao by-products are: Cacao shell, cacao mucilage known as cacao slime and bean husk.

The process presented in this invention has a parallel process in which the inoculum is prepared from one of the varieties:

*Cordycepts sinesis* and *Cordyceps militaris, Ganoderma lucidum, Pleurotus ostreatus, P. sajor-caju, P. ostreatoroseus, P. eringii, Ganoderma lucidum, G. Applanatum, Ganoderma tsugae, Flammulina velutipes, Lentinula edodes, Lentinus strigellus, Morchella esculenta, M. conica, Macrolepiota procera, Volvariella volvacea, Grifola frondosa, Agaricus bisporus, A. blazei or A. brasiliensis, A. bitorques, A. brunnensis, Armillaria melea, Armillaria lutea, Oudemansiella canarii, Pycnoporus sanguineus, P. cinabarina, Tremella fuciformis, Coprinus comatus, Coprinus cinereus, Cantharellus cibarius, Hericium erinaceus, Boletus edulis, Agrocybe spp., Auricularia spp., Inocybe spp., Lactarius spp., Trametes spp., Fomes spp., Ramaria spp., Suillus spp., Collybia spp., Coriolus versicolor, Pholiota nameko, Schizophyllum commune.*

Once the above components are prepared, the process is developed from the inoculation of the byproducts with solid mycelium ner specific time, temperature, humidity, and light variables in order to produce the desired effect which is to improve the physicochemical properties of the by-products, so that they become edible, nutritional products of low cost and easy obtention; this way as a final result of the myceliation, a functional food is obtained. Functional food with characteristics of high increased protein and antioxidants. All this is achieved by the use of by-products that would otherwise pollute the environment.

Another important characteristic of this invention is that the starting materials are not mixed with plaster (usually used in fungal cultures) because this invention concerns a process for obtaining a food.

**The** aforementioned byproducts that are the raw material of the method have latent and inaccessible substances of great importance such as antioxidants, original protein, vitamins, minerals that cannot be used because of their bad taste and poor digestibility, however with the process
disclosed in this invention, in which macromocytes and entomopathogenic macromycetes are used, these hidden preexisting qualities in the byproducts are rescued and improved. These substances where impossible to access in the original state of the by-product structure. This is a completely different process to the one known as "micelled green coffee beans" or "mycelial green cacao beans", which is a different technological method and purpose to be applied to market ready harvested beans.

The possibility of accessing and highlighting the properties of coffee and cacao by-products was unexpectedly obtained once the method of the invention was carried out, specifically in obtaining the attributes of such components such as digestibility, protein improvement, decrease in chlorogenic acids and tannins.

In table 8 the change in digestibility is observed in accordance with the decrease of tannins in the coffee pulp.

**Table No. 8**

| Table of Variation % in content of Tannins. | | |
|---|---|---|
| **Content of Tannins g/100g** | | |
| **Coffee Pulp** | **New Functional Food** | **% of Variation** |
| 3,7 | 0,0304 | 99.178% |

Laboratorio Ciencia de los alimentos. Universidad Nacional de Colombia based in Medellin.

Codigo: LABCA-012. M.Sc., Dr. Benjamin Alberto Rojano. Octubre 02 de 2017.

Regarding caffeine, improvements are also observed, when the coffee pulp is subjected to the process of the invention, it decreases by 66%

**Table No. 9 - Caffeine content**

| **Content of Caffeine g/100g sample** | | |
|---|---|---|
| **Coffee Pulp** | **New Functional food** | **% of variation** |
| 1,3 | 0,44 | 66,1538462 |

Laboratorio de Análisis Instrumental. Universidad Nacional de Colombia, based in Medellin. Report No. 17-HPLC030. Chemical Engineer: MSc. Jair Gaviria. October 10, 2017.

From the amino acid content, improvements in its content are observed, given that this laboratory study is reported.

**Table No 10 - Amino Acids in a product of the invention:**

| **Table of Aminoacids New Functional food** | | |
|---|---|---|
| ASP | 9,09 | g/16gN |
| THE | 4,54 | g/16gN |
| L-SERINE | 5,12 | g/16gN |
| GLU | 10,76 | g/16gN |
| GLY | 5,77 | g/16gN |
| ALA | 5,41 | g/16gN |
| VAL | 5,84 | g/16gN |
| ILE | 4,04 | g/16gN |
| LEU | 7,00 | g/16gN |
| TYR | 3,61 | g/16gN |
| PHE | 4,54 | g/16gN |
| LYS | 3,46 | g/16gN |
| HIS | 2,02 | g/16gN |
| ARG | 3,53 | g/16gN |
| | | |
| Report 17-HPLC019. Universidad Nacional de Colombia -Campus - Medellin, Antioquia | | |

Similarly, in the analysis of antioxidant activity and content of secondary metabolites with antioxidant properties on the product of the invention, it was found:

**TABLE No.11 - Antioxidants Report:**

| TOTAL PHENOLS CONTENT | | | | |
|---|---|---|---|---|
| SAMPLE | mg, Galic Acid / 100 g sample | MEDIA | Standard deviation | Coefficient of variation |
| POWDER | 110,2 | 110,5 | 1,5 | 1,4 |
| | 109,13 | | | |
| | 112,08 | | | |

| ANTIOXIDANT CAPACITY BY: ABTS | | | | |
|---|---|---|---|---|
| SAMPLE | TEAC (µmol Trolox / 100 g sample) | MEDIA | Standard deviation | Coefficient of variation |
| POWDER | 509,44 | 524,9 | 36,6 | 7 |
| | 498,53 | | | |
| | 566,72 | | | |

| ANTIOXIDANT CAPACITY BY: DPPH | | | | |
|---|---|---|---|---|
| SAMPLE | TEAC (µmol Trolox / 100 g sample) | MEDIA | Standard deviation | Coefficient of variation |
| POWDER | 431,53 | 434 | 18,5 | 4,3 |
| | 416,86 | | | |
| | 453,53 | | | |

| CAPACIDAD REDUCTORA POR: FRAP | | | | |
|---|---|---|---|---|
| SAMPLE | mg of ascorbic acid /100g sample | MEDIA | Standard deviation | Coefficient of variation |
| POWDER | 27,63 | 27,6 | 0,4 | 1,4 |
| | 27,19 | | | |
| | 27,96 | | | |

| CONDENSED TANNINS CONTENT | | | | |
|---|---|---|---|---|
| SAMPLE | mg, Catechin/100 g sample | MEDIA | Standard deviation | Coefficient of variation |
| POWDER | 29,81 | 30,4 | 2,2 | 7,4 |
| | 28,49 | | | |
| | 32,87 | | | |

| TOTAL FLAVONOIDS CONTENT | | | | |
|---|---|---|---|---|
| SAMPLE | mg, Catechin/100 g sample | MEDIA | Standard deviation | Coefficient of variation |
| POWDER | 11,64 | 11,5 | 0,5 | 4,6 |
| | 10,91 | | | |
| | 11,94 | | | |

| ORAC VALUE | | | | |
|---|---|---|---|---|
| SAMPLE | TEAC (µmol Trolox / 100 g sample) | MEDIA | Standard deviation | Coefficient of variation |
| POWDER | 1450,2 | 1556,2 | 118,9 | 7,6 |
| | 1684,7 | | | |
| | 1533,6 | | | |

Laboratorio Ciencia de los alimentos. Universidad Nacional de Colombia based in Medellin.

Codigo: LABCA-012. M.Sc., Dr. Benjamin Alberto Rojano. October 02, 2017.

The following table compares the amino acids of one of the new food products with known traditional foods. It can be observed that the figures are similar to some amino acids contained in the other foods.

**Table No. 12**

| | **Corn** | **Soybean flour** | **Cotton seed flour** | **New Functional food based on coffee pulp** |
|---|---|---|---|---|
| Aminoacid | | | | |
| Lysine | 1,7 | 6,3 | 4,3 | 3,46 |
| Histidine | 2,8 | 2,4 | 2,6 | 2,02 |
| Arginine | 3,1 | 7,2 | 11,2 | 3,53 |
| Threonine | 3,3 | 3,9 | 3,5 | 4,54 |
| Cystine | 1 | 1,8 | 1,6 | |
| Methionine | 1,6 | 1,3 | 1,4 | |
| Valina | 5 | 5,2 | 4,9 | |
| Isoleucine | 4,3 | 5,4 | 3,8 | 4,04 |
| Leucine | 16,7 | 7,7 | 5,9 | 7,0 |
| Tyrosine | 5 | 3,2 | 2,7 | 3,61 |
| Phenylalanine | 5,7 | 4,9 | 5,2 | 4,54 |
| Hydroxyproline | | | | |
| Aspartic Acid | | | | 9,09 |
| Serine | | | | 5,12 |
| Glutamic Acid | | | | 10,76 |
| Proline | | | | |
| Glycina | | | | 5,77 |
| Alanine | | | | 5,41 |

| | | | | |
|---|---|---|---|---|
| Source: Bressani y col. Turrialba 22:299, 1972 and own data. | | | | |

In laboratory tests, specifically with macromiceate, the following protein enrichment has been found.

**Table No.13**

| Cultivated Mushroom | | | |
|---|---|---|---|
| *Ganoderma lucidum* | | | |
| Substrates raw material | Initial Protein (N*6,25) | Final protein on substrate (N*4,38) | % Variation |
| Coffee Pulp | 10,31 | 26,56 | 157% |

| | | | |
|---|---|---|---|
| Universidad de Caldas, November 7, 2017 Physical Chemist Mauricio Sánchez Muñoz, Technical director Henry Hernán Castaño | | | |

**Table No. 14**

| This table No. 14 shows preferred examples of mixtures of performance of the invention in relation to the by-products of the raw material of the functional food: | | | | | | | | |
|---|---|---|---|---|---|---|---|---|
| **Raw Material** | | | | | | | | |
| | **Coffee Pulp** | **Coffee Husk** | **Coffee Silver skin** | **Spent ground coffee** | **Coffee tree sawdust** | **Cocoa shell** | **Cocoa Mucilage** | **Cocoa Husk** |
| **Coffee Pulp C/N = 31 Humidity 78,56%** | It can be used 100% pulp | Both ingredie nts can be mixed between 10-90% | Both ingredient s can be mixed between 10-90% | Spent ground coffee can be used until 75% of the mixture and any quantity of coffee pulp | Th coffee tree sawdust can be used until a maximum of 50% of the mixture in weight with the other ingredients | It can be mixed between 10% to 75% in weight of the cocoa shell | The cocoa mucilage and the coffee pulp can be mixed only 50 % of each ingredient | The coffee pulp and the cocoa husk can be mixed between 10% and 90% of each ingredient |
| **Coffee Husk C/N =105 Humidity 12%** | Both ingredie nts can be mixed between 10-90% | The coffee husk can be used alone 100% pouring water until the humidit y is of 70% to 80% | Both ingredient s can be mixed between 10-90% | Spent ground coffee can be used until 75% of the mixture with any quantity of coffee husk | Th coffee tree sawdust can be used until a maximum of 50% of the mixture in weight with the other ingredients | It can be mixed between 10% to 75% in weight of the cocoa shell | The cocoa mucilage and the coffee husk can be mixed only 50 % of each ingredient | Both ingredient s can be mixed between 10-90% |
| **Spent ground coffee C/N : 33 Humidity 60,01%** | The spent ground coffee can be a part of this mixture only until 75% of it | The spent ground coffee can be a part of this mixture only until 75% of it | The spent ground coffee can be a part of this mixture only until 75% of it | The spent ground coffee can be a part of this mixture only until 75% of it, but has to be mixed with another byprodu ct | The coffee tree sawdust can be mixed until 50% of the total mixture and the spent ground coffee until 75% | The cocoa shell until 75% of the mixture and the spent ground coffee until 75% of the mixture | The cocoa mucilage could be mixed until 50% and the spent ground coffee until 75% | The spent ground coffee can be mixed until 75% of the mixture and any quantity of the cocoa husk |
| **Coffee tree Sawdust C/N:** 74 **Humidity 14,20%** | The coffee tree sawdust can be used until a maximu m of 50% of the mixture in weight with the other ingredie nts | The coffee tree sawdust can be used until a maximu m of 50% of the mixture in weight with the other ingredie nts | The coffee tree sawdust can be used until a maximum of 50% of the mixture in weight with the other ingredient s | The coffee tree sawdust can be mixed until 50% of the total mixture and the spent ground coffee until 75% | The coffee tree sawdust can be used until a maximum of 50% of the mixture in weight with the other ingredients | The coffee tree sawdust can be mixed until 50% and the cocoa shell until 75% in weight | The cocoa mucilage can be mixed until 50% of the mixture and the coffee tree sawdust until 50% | The coffee tree sawdust can be mixed from 10% to 50% of the mixture |
| | | | | | | | | |
| **Silver skin C/N =22 Humidity 16%** | Both ingredie nts can be mixed between 10-90% | Both ingredie nts can be mixed between 10-90% | The silver skin can be used 100% as substrate | The spent ground coffee can be a part of this mixture only until 75% of it | The coffee tree sawdust can be mixed until 50% of the mixture | The cocoa shell can be used until 75% in weight and any quantity of silver skin | The cocoa mucilage can be combined until 50% in weight and any quantity of the silver skin | Both ingredient s can be mixed between 10-90% |
| **Cocoa shell C/N: 10,78 humidity 82,39%** | It can be mixed between 10% to 75% in weight of the cocoa shell | It can be mixed between 10% to 75% in weight of the cocoa shell | It can be mixed between 10% to 75% in weight of the cocoa shell with any quantity of silver film | The cocoa shell until 75% of the mixture and the spent ground coffee until 75% of the mixture | The coffee tree sawdust can be mixed until 50% and the cocoa shell until 75% in weight | It can be used until 75% for the mixture in weight. It has to be mixed with other byprodu ct | The cocoa mucilage can be mixed until 50% of the mixture in weight | Both ingredient s can be mixed between 10-90% |
| **Cocoa mucilage C/N: 28,41 humidity 80%** | The cocoa mucilag e and the coffee pulp can be mixed only 50 % of each ingredie nt | The cocoa mucilag e and the coffee husk can be mixed only 50 % of each ingredie nt | The cocoa mucilage can be combined until 50% in weight and any quantity of the silver skin | The cocoa mucilag e could be mixed until 50% and the spent ground coffee until 75% | The cocoa mucilage can be mixed until 50% of the mixture and the coffee tree sawdust until 50% | The cocoa mucilag e can be mixed until 50% of the mixture in weight | The cocoa mucilage can be used 100% as substrate | Cocoa mucilage can be used until 50% of the mixture with Coffee husk |
| **Cocoa Husk C/N: 2,06 humidity 6,32%** | The coffee pulp and the cocoa husk can be mixed between 10% and 90% of each ingredie nt | Both ingredie nts can be mixed between 10-90% | Both ingredient s can be mixed between 10-90% | The spent ground coffee can be mixed until 75% of the mixture and any quantity of the cocoa husk | The coffee tree sawdust can be mixed from 10% to 50% of the mixture | Both ingredie nts can be mixed between 10-90% | Cocoa mucilage can be used until 50% of the mixture with Coffee husk | The coffee husk can be used 100% as substrate |
| | | | | | | | | |
| **The past mixtures shown in the table are calculated with the natural humidities from the raw materials. The final substrates have humidities between 80% and 90%.** | | | | | | | | |
| **In these substrates Calcium carbonate and gypsum are not used** | | | | | | | | |
| | | | | | | | | |
| **The byproducts: Coffee pulp, Silver skin, coffee husk, cocoa husk, cocoa mucilage can be used 100% as substrate.** | | | | | | | | |
| **The spent ground coffee, and cocoa shell can be used until 75% of the mixture. To use spent ground coffee as an only ingredient it has to be miceliated with two different macromycetes.** | | | | | | | | |
| **The cocoa mucilage in mixtures, can be used between 10% and 50% depending on the other byproduct that is used.** | | | | | | | | |
| **The coffee tree sawdust can't be used alone and its maximum quantity in weight is until 50%. To use it 100% as substrate must be miceliated with two different macromycetes.** | | | | | | | | |

The mixtures above are calculated with the initial natural humidity of the raw materials and the final moisture content of the mixture is sought between 80 and 90%. Neither Calcium Carbonate nor plaster are used, as it is usually used in formulations for the production of the fruiting body.

The byproducts: coffee pulp, silver coffee film, coffee cisco, cacao shell, cacao slime and cacao husk can each be used 100% as a substrate.

The coffee grounds residue can be used up to a maximum of 75% of the final mixture. In order to use 100% of the coffee beans residue as a substrate, it must be micelled with two different macromycetes.

In mixtures, the cacao slime can be used between 10 and 50% depending on the other by-product with which it is mixed.

Coffee tree sawdust cannot be used alone and its maximum contribution in the mixture is up to 50%. To use it 100% it must be micelled with two different macromycetes.

As an example of the embodiment of the invention, the mixture of cocoa husk with coffee husk at 50% in dry weight each is shown below, taking the values shown in the above table as follows:

1-It can be mixed from 10% to 75% of cocoa husk. This means that of the two components only those percentages of cocoa husk can be mixed and the rest is COMPLETED WITH coffee husk.

2- The cocoa husk is a material from the cultivation of cocoa, therefore it is found after the break of the pod as a by-product. Once the pod is broken and crushed in the process of the farm, the material is adapted, that is, it is ready to be mixed.

3-On the other hand, the cisco or coffee husk is found as a residue of threshing and its particle is small, it is simply mixed with the other material.

4- The humidity of the final mixture depends on the humidity of the two components (coffee husk 12% - cocoa husk 82.39%)

5-The mixture is subjected to anaerobiosis with the natural moisture of the mixture

| EXAMPLE OF FORMULATION COCOA HUSK - COFFEE HUSK | | | | | |
|---|---|---|---|---|---|
| To have 50% of both products by weight dry base | | | | | |
| Material | Moist kilos | Humidity | Dry weight | % in dry | Water |
| Cocoa husk | 283,93 | 82% | 50 | 50,00 | 232,82226 |
| Coffee husk | 56,82 | 12% | 50 | 50,00 | 6,81818182 |
| Mixture natural humidity | | | | | 70,3278099 |

Then the following general steps of the process are followed:

Draining, filling the container, inoculation, first incubation, second incubation, selection of mycelium, drying, coarse grinding enriched substrate, fine grinding, heat treatment, packing.

Once the process in this invention has been carried out, it has been possible to verify the surprising effect when macromycetes and some entomopathogenic macromycetes are combined with the coffee and / or cacao by-products.

In the search to find new sources of protein it has been found that macromycetes increase the protein level of the substrate in which they are grown.

Seeking to enrich the fungus in its protein content using the by-products, this process grows the macromycetes in a substrate rich in nitrogen, minerals and antioxidants that when transformed by the fungus also increase in a substantial way the content of these elements.

However, with this process it wasn't expected for the fungi to perform as well if micelled on coffee and / or cacao byproducts since they had always been grown on raw materials with a high content of cellulose and lignin, because their cultivation sought degradation of lignin and cellulose through transformation with fungi; it had also had been used on cereals and green beans of cacao and coffee, but never on their byproducts.

Therefore, the solution provided by this invention is a development that exploits, enriches, makes digestible and improves the palliative qualities of by-products resulting from the process of cultivation and industrialization of coffee and cacao, through the transformation produced by the mycelium of the macromycete or the entomopathogenic macromycete that grows directly in the biomass of the by-product, decomposing the fibers, secreting enzymes, exfoliating, and enriching the material with proteins, vitamins and mineral salts.

Regarding the time of production of the functional food, this invention also provides clear advantages in that the total time of production of the functional food takes a total of between 28 and 38 days, which is a short time keeping in mind the process and the materials used in the invention, which require special times and temperatures.

### Process of obtaining functional food.

This inventive process is developed from all the byproducts of the process, post-harvest and industrialization of coffee and cacao ; these are: coffee pulp, coffee husk, silver coffee film, coffee mucilage, coffee grounds residue, coffee tree sawdust, cacao husk, cacao slime, and cacao husk, which are the exocarp, mesocarp, endocarp and epidermis of the fruits, all of them exterior to the so-called green coffee and cacao almond; these by-products are not mixed with other components.

The other raw material of the invention is entomopathogenic macromycete mycelium as *Cordyceps sinesis* and *Cordyceps militaris,* and macromycete preferably: *Pleurotus ostreatus, P. sajor-caju, P. ostreatoroseus, P. eringii, Ganoderma lucidum, G. Applanatum, Ganoderma tsugae, Flammulina velutipes, Lentinula edodes, Lentinus strigellus, Morchella esculenta, M. conica, Macrolepiota procera, Volvariella volvacea, Grifola frondosa, Agaricus bisporus, A. blazei* or *A. brasiliensis, A. bitorques, A. brunnensis, Armillaria melea, Armillaria lutea, Oudemansiella canarii, Pycnoporus sanguineus, P. cinabarina, Tremella fuciformis, Coprinus comatus, Coprinus cinereus, Cantharellus cibarius, Hericium erinaceus, Boletus edulis, Agrocybe spp., Auricularia spp., Inocybe spp., Lactarius spp., Trametes spp., Fomes spp., Ramaria spp., Suillus spp., Collybia spp., Coriolus versicolor, Pholiota nameko, Schizophyllum comune "*

This invention is characterized by having the following steps:
1. Adequacy of the raw material: The materials or byproducts of the production of coffee and / or cacao, coffee pulp, coffee husk and silver coffee film, cacao shell, coffee grounds residue, coffee mucilage, sawdust of coffee tree, cacao slime, and cacao husk, are selected and / or mixed, then they are placed in sacks and prepared.
2. Anaerobiosis: Once the materials are selected, they are immersed in water for 10 to 20 days, causing fermentation and the elimination of microorganisms that live in aerobic conditions, this anaerobiosis also allows the reduction of chlorogenic acids. Such water is previously available in tanks.
3. Draining of the material: Once the anaerobic period has ended, the sacks with the by-products are extracted and drained until obtaining humidity levels of 80 to 90%.
4. Filling bags or containers: Bags, plastic containers or trays are filled with a certain weight to the selected substrate, which already have the necessary humidity for the next step.
5. Inoculation: Sowing is carried out on the chosen substrate with solid inoculum of macromycete or entomopathogenic macromycete inside the bags, trays or containers already prepared, and homogeneously mixed, where such macromycete inoculum used in the process may comprise at least one of the following:
   *Pleurotus ostreatus, P. sajor-caju, P. ostreatoroseus, P. eringii, Ganoderma lucidum, G. Applanatum, Ganoderma tsugae, Flammulina velutipes, Lentinula edodes, Lentinus strigellus, Morchella esculenta, M. conica, Macrolepiota procera, Volvariella volvacea, Grifola frondosa, Agaricus bisporus, A. blazei* or *A. brasiliensis, A. bitorques, A. brunnensis, Armillaria melea, Armillaria lutea, Oudemansiella canarii, Pycnoporus sanguineus, P. cinabarina, Tremella fuciformis, Coprinus comatus, Coprinus cinereus, Cantharellus cibarius, Hericium erinaceus, Boletus edulis, Agrocybe spp., Auricularia spp., Inocybe spp., Lactarius spp., Trametes spp., Fomes spp., Ramaria spp., Suillus spp., Collybia spp., Coriolus versicolor, Pholiota nameko,* Schizophyllum comune, wherein the inoculum of macromycete entomopathogen can comprise *Cordyceps sinesis* or *Cordyceps militaris,*
6. Incubation: The bags are placed in a growing room with controlled temperature and luminosity, this incubation period takes between 3 and 20 days at a temperature between 35 to 40 degrees Celsius, with luminosity between 100 and 1500 lux. These temperatures don't allow the fruiting body of the fungus to appear, but it does enrich the substrate by transforming the mushroom mycelium on this substrate.
7. Second incubation: once the incubation is finished or the biomass is colonized, a modification of its temperature variables is carried out, it is increased from 40 to 50 degrees Celsius for 4 to 8 days looking for an accelerated colonization and greater degradation of the structures of the material, to the point of bringing the mycelium to overproduction and preventing the growth of the hat (carpophore).
8. Over-mycelial material selection: The blocks that have the highest amount of mycelium or over-mycelial are chosen.
9. Drying of the material: chosen material, is placed in silo dryers (air) or by solar exposure, or any method of drying to obtain humidity levels between 10 and 15%.
10. Gross grinding of enriched substrate: The material chosen is taken to a mill of blades and hammers to make a first grind to obtain a small particle.
11. Fine grinding of enriched substrate: The material enters a high-speed mill, which makes the particle much smaller to obtain a fine powder
12. Thermal treatment in autoclave: The material is taken to an autoclave for a thermal treatment at 120 degrees Celsius, between 30 and 60 minutes and competing particles and unwanted microorganisms are eliminated.
13. Packing: After having a sterile material with the heat treatment, it is packed in the packing units that the market requires.

### DESCRIPTION OF THE DRAWINGS

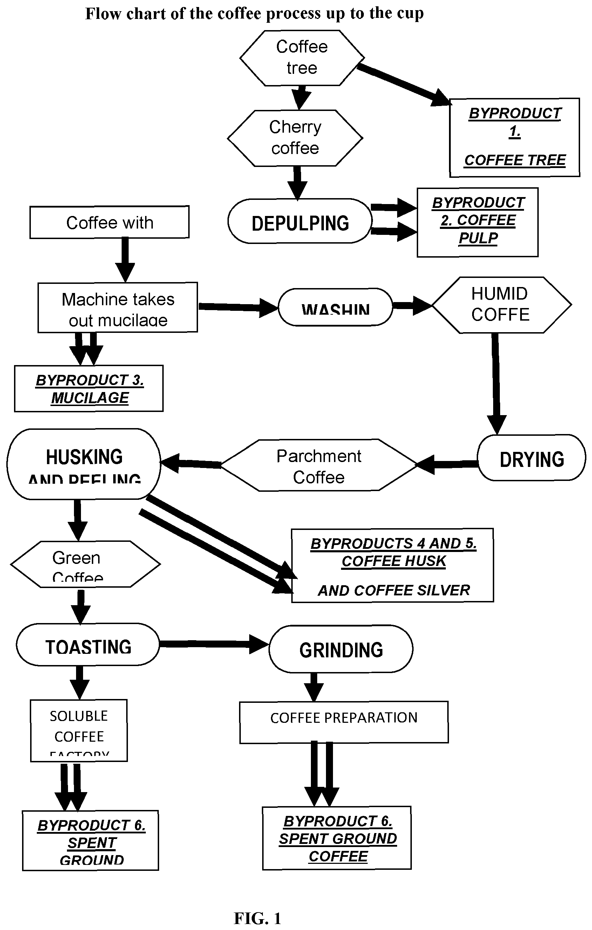

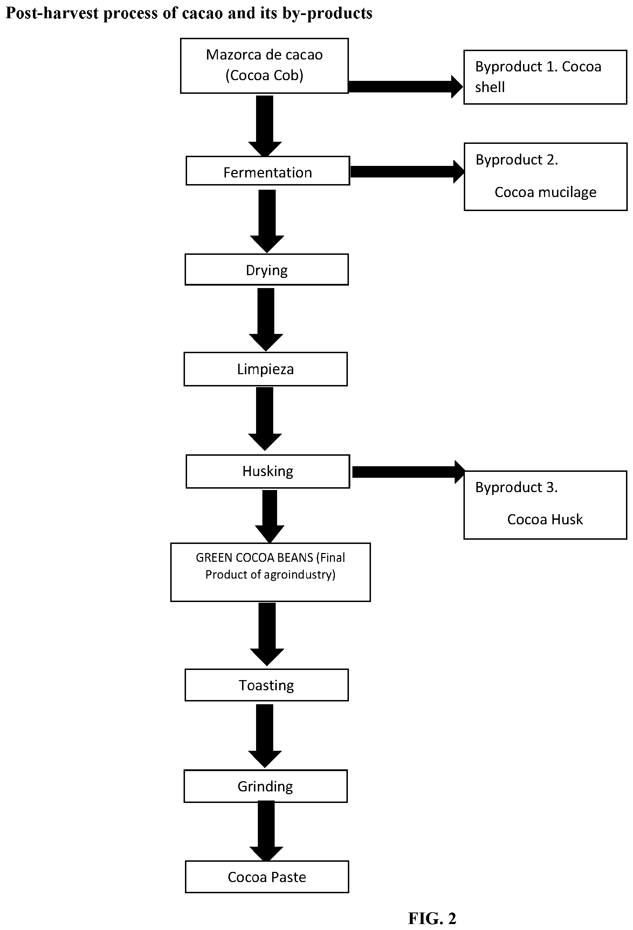

Figure 1 describes the process of obtaining coffee from its collection to the rate, in this process the reference to by-products with double arrow is observed, it is on these by-products that are seen in the indicated double arrow are those used in the invention, In this way the process of obtaining coffee has the following stages:
   1. Coffee tree: Shrub where coffee beans grow in cherry
      1.1. Coffee Tree Stem: This is the first byproduct of the crop in the field and it is called zoca because the tree is undercut with stem cutting at ground level every 5 years for renovation.
   2. Coffee in cherry: From the bush come the coffee beans that are collected
   3. Pulping: First process on the farm called coffee bean benefit that consists in removing the pulp from the grain, the exocarp and coffee mesocarp (Cherry) are removed.
      3.1. Coffee pulp: This is the second byproduct of the crop in the field, it is what comes out or remains of the pulping.
   4. Coffee with mucilage: It is the product after pulping, it is of the grain covered with mucilage
   5. Desmucilaginador: The mucilago is removed from the coffee bean by means of a machine called desmucilaginador.
      5.1. Mucilago: This is the third crop byproduct in the field, this byproduct is liquid. 6. Washing: This is the second process on the farm. Where the coffee bean is washed.
   7. Wet coffee: The result of coffee washing.
   8. Drying: Third process on the farm. The coffee bean is dried in silos.
   9. Parchment coffee: dried coffee beans are known, still covered by a protective shell called cascarilla independent of the coffee variety
   10. Shelling and Peeling: Industrial process of removing the husk from the grain in the husking and the silver film in the peeling in coffee threshers
      10.1. Coffee husk and Silver coffee film: The fourth by-product and the fifth by-product, these are already from the coffee industry, 1 1. Green Coffee: Coffee after peeling and peeling.
   12. Roasting: Heat treatment to which the green coffee is subjected. During the roasting, the transformation of the sensory, chemical and physical properties of green coffee beans to roasted or roasted coffee products occurs. Roasted coffee has two uses: Ground Coffee and Soluble Coffee
      12.1 Soluble coffee company: Companies that produce instant coffee.
      12.2 Coffee Borra: This is the sixth Byproduct when the company sells soluble coffee generates coffee waste as waste
   13. Grinding: it is the process, both domestic and industrial, of reducing the roasted grain to powder to facilitate the preparation of the infusion using a mill.
      13.1. Individual preparation Coffee: Ground coffee is prepared by different methods known in the market for the consumption of people.
      13.2 Borra de Café: This is the sixth byproduct
Figure 2 describes the process of benefit of cocoa and its by-products. The benefit of cocoa is the process that is carried out from its collection until the cocoa paste is obtained, in this process waste or by-products are generated that are used in the invention, it has the following phases:
   1. Cocoa Cob: It is the fruit that is visible from the cocoa tree.
      1.1 Cocoa Shell: Obtained as the first by-product of the peeled corn.
   2. Fermentation: The cocoa pods are barked, breaking them to release the grains covered with a white pulp (mucilage) that undergo fermentation for two days, the pulp is liquefied in the fermentation boxes arranged on the farms.
      2.1 Cocoa slime: The second byproduct is obtained.
   3. Drying: After fermentation, the grains are dried, to reduce their moisture content, from 60% to 8% or less. It dries naturally (in the sun) or artificial (with mechanical dryers). The dried grains are then selected and classified, bagged (in jute bags) and stored (in dry and ventilated places).
   4. Cleaning: The grains are subjected to a cleaning, released from impurities. 5. Shelling: A layer of cocoa almond called cascarilla is removed
   5.1. Cocoa husk: The third by-product is obtained.
   6. GREEN COCOA BEANS:
   7. Roasting: The fragments obtained are roasted between 120 ° C and 140 ° C and between 20 and 40 minutes. The duration and degree of roasting or roasting depend on the origin of the grains and the desired final product.
   8. Grinding: Once cooled, the grains are crushed into large pieces called nibs and separated into pots. The nibs are ground until the cocoa paste, dough or liquor is obtained.
   9. Cocoa paste: the cake or cocoa paste, contains between 8% or 20% butter. The cake is crushed and ground to obtain cocoa powder.
Figure 3 describes the process of the invention for obtaining the functional food In this the phases and the characteristic of each one are detailed

## Claims

1. A process for obtaining a functional food, **characterized by** comprising the following steps:
a. adaptation of the raw material composed of one of the by-products selected from the group of coffee pulp, coffee husk, silver coffee film, coffee tree sawdust, coffee grounds residue, coffee mucilage, cacao shell, cacao slime, cacao husk, or a combination thereof;
b. anaerobic fermentation process by immersion in water, wherein the anaerobiosis time is between 10 and 20 days;
c. draining of raw material;
d. filling bags or containers with the mixture;
e. inoculation with macromycete mycelium;
f. incubation of macromycete mycelium, wherein the incubation takes between 3 and 20 days, at a temperature of 35 to 40 degrees Celsius, with luminosity between 100 and 1500 lux;
g. second incubation of macromycete;
h. selection of over-myceliated material;
i. drying of the material;
j. gross grinding of the enriched material;
k. fine grinding of the enriched material;
l. thermic treatment; and
m. packing.

2. The process of claim 1, wherein the raw material is drained until reaching a humidity of 80 to 90%.

3. The process of any of the claims 1 or 2, wherein the second incubation takes between 4 to 8 days at a temperature of 40 to 50 degrees Celsius.

4. The process of any of the claims 1 to 3, wherein the raw material is dried to obtain humidity between 10 and 15%.

5. The process of any of the claims 1 to 4, wherein the thermic treatment is done at 120 degrees Celsius for a time between 30 and 60 minutes.

## Patentansprüche

1. Ein Prozess zur Gewinnung eines funktionalen Lebensmittels, **dadurch gekennzeichnet, dass** es die folgenden Schritte umfasst:
a. Anpassung des Rohmaterials, das aus einem der Nebenprodukte ausgewählt wird, die aus der Gruppe von Kaffeepulpe, Kaffeeschale, Silberhaut des Kaffees, Sägemehl des Kaffeebaums, Kaffeesatz-Rückstand, Kaffeeschleim, Kakaoschale, Kakaoschleim, Kakaohülse oder einer Kombination davon bestehen;
b. Anaerober Fermentationsprozess durch Eintauchen in Wasser, wobei die Anaerobiosezeit zwischen 10 und 20 Tagen liegt;
c. Abgießen des Rohmaterials;
d. Befüllen von Beuteln oder Behältern mit der Mischung;
e. Inokulation mit Makromyzeten-Myzel;
f. Inkubation des Makromyzeten-Myzels, wobei die Inkubierung zwischen 3 und 20 Tagen andauert, bei einer Temperatur von 35 bis 40 Grad Celsius und mit einer Leuchtstärke zwischen 100 und 1500 lux;
g. zweite Inkubation des Makromyzeten;
h. Auswahl des übermyzelierten Materials;
i. Trocknen des Materials;
j. Grobmahlen des angereicherten Materials;
k. Feinmahlen des angereicherten Materials;
l. thermische Behandlung; und
m. Verpacken.

2. Der Prozess nach Anspruch 1, wobei das Rohmaterial solange abgegossen wird bis es eine Feuchtigkeit von 80 bis 90% erreicht.

3. Der Prozess nach einem der Ansprüche 1 oder 2, wobei die zweite Inkubierung zwischen 4 und 8 Tagen andauert, bei einer Temperatur von 40 bis 50 Grad Celsius.

4. Der Prozess nach einem der Ansprüche 1 bis 3, wobei das Rohmaterial getrocknet wird, um eine Feuchtigkeit zwischen 10 und 15% zu erhalten.

5. Der Prozess nach einem der Ansprüche 1 bis 4, wobei die thermische Behandlung bei 120 Celsius über einen Zeitraum von 30 bis 60 Minuten erfolgt.

## Revendications

1. Un procédé pour obtenir un aliment fonctionnel, **caractérisé par** la réalisation des étapes suivantes :
a. l'adaptation de la matière première composée de l'un des sous-produits sélectionnés dans le groupe de pulpe de café, cosse de café, pellicule argentée de café, sciure de bois de café, résidu de marc de café, mucilage de café, coque de cacao, bave de cacao, cosse de cacao, ou d'une combinaison de ceux-ci ;
b. le procédé de fermentation anaérobie par immersion dans l'eau, dans lequel le temps d'anaérobiose est compris entre 10 et 20 jours ;
c. l'égouttage de la matière première ;
d. la remplissage de sacs ou de récipients avec le mélange ;
e. l'inoculation avec du mycélium de macromycète ;
f. l'incubation du mycélium de macromycète, dans laquelle l'incubation dure entre 3 et 20 jours, à une température de 35 à 40 degrés Celsius, avec une luminosité comprise entre 100 et 1500 lux ;
g. la seconde incubation du macromycète ;
h. la sélection du matériau surmycélié ;
i. la séchage du matériau ;
j. le broyage grossier du matériau enrichi ;
k. le broyage fin du matériau enrichi ;
l. le traitement thermique ; et
m. l'emballage.

2. Le procédé selon la revendication 1, dans lequel la matière première est drainée jusqu'à atteindre une humidité de 80 à 90 %.

3. Le procédé selon l'une quelconque des revendications 1 ou 2, dans lequel la seconde incubation dure entre 4 et 8 jours à une température de 40 à 50 degrés Celsius.

4. Le procédé selon l'une quelconque des revendications 1 à 3, dans lequel la matière première est séchée pour obtenir une humidité comprise entre 10 et 15 %.

5. Le procédé selon l'une quelconque des revendications 1 à 4, dans lequel le traitement thermique est nul à 120 degrés Celsius pendant une durée comprise entre 30 et 60 minutes.
